# EUROPEAN PATENT SPECIFICATION

(11) **EP 2 222 970 B1**
(45) Date of publication and mention of the grant of the patent: **15.08.2012**
(21) Application number: 07822781.6
(22) Date of filing: 21.11.2007
(51) Int. Cl.: F16C 3/06, F16H 9/12, F16H 55/36, F16H 55/56

(54) **SHAFT-AND-FLANGE COMPONENT FOR A PULLEY OF A CONTINUOUSLY VARIABLE TRANSMISSION**
WELLEN- UND FLANSCHKOMPONENTE FÜR EINE RIEMENSCHEIBE EINES STUFENLOSEN GETRIEBES
COMPOSANT ARBRE ET BRIDE DESTINÉ À UNE POULIE D'UNE TRANSMISSION À VARIATION CONTINUE

(43) Date of publication of application: 01.09.2010
(73) Proprietor: Robert Bosch GmbH, 70442 Stuttgart (DE)
(72) Inventor: HUPKES, Ingmarus Geert, NL-3524 CJ Utrecht (NL)
(74) Representative: Plevier, Gabriel Anton Johan Maria
(86) International application number: PCT/EP2007/062643
(87) International publication number: WO 2009/065440

(56) References cited:
- DE-A1- 10 328 453
- DE-A1-102004 008 728
- JP-A- 2003 194 191

## Description

The present invention relates to a shaft-and-flange component for a pulley of a continuously variable transmission, which component includes an essentially cylindrical pulley shaft provided with a flange that is integrally formed therewith. In the pulley this flange represents the so-called fixed flange, which is to be combined with a movable pulley flange that is fitted on the shaft such that it is rotationally coupled to, but can slide in axial direction along the shaft. These pulley flanges are also referred to as sheaves and/or discs.

Each pulley flange defines an essentially frusto-conical outer surface, which flange surfaces are facing one another such that a V-shaped space is defined there between for accommodating a drive belt of the transmission. The transmission incorporates two such pulleys with the drive belt being wrapped around them and held between the conical flanges of the respective pulleys. During operation of the transmission, the movable pulley flanges are forced towards the fixed pulley flanges by means of movement means of the respective pulleys, such that the drive belt is clamped between them. This pulley and transmission, as well as their operation, are well known in practice and are, for instance, described in EP-A-1498639.

The design of the pulleys is a/o determined by the force and stress loads that occur during operation of the transmission. A particularly highly stressed area is located at the region where the shaft and the fixed flange meet, i.e. where the conical surface of the fixed flange links up with the cylindrical surface of the shaft. Traditionally, such region is designed as a concave, circular arc-shaped transition, as seen in tangential cross-section, so as to minimise the tensile stress increasing notch-effect thereof in order to prevent, or at least suppress fatigue crack initiation and/or growth. This known design is illustrated in detail in the generic JP-A-2003/194191. Hereby, the actually applied radius of curvature of such curved transition surface will always be a compromise between decreasing the local tensile stress level -by applying a larger radius- and increasing either the extent of the flange surface in radially inward direction or the locally effective diameter of the pulley shaft -by applying a smaller radius.

It is noted that in the German patent application DE 103 28 453 A1 it has been described in relation to a crankshaft of a piston-in-cylinder-type combustion engine to provide a curved transition region between the cylindrical shaft surface and the side surface of the web parts of the crankshaft. This known transition region is shaped according to a compound curvature with a largerst radius of curvature occurring at the shaft surface side of the transition region and a smallest radius of curvature occurring at the web side surface side of the transition region.

It is an object of the present invention to further decrease the said tensile stress level at the region where the shaft and the fixed flange of the pulley meet, however, without decreasing the shaft diameter and/or increasing the inner diameter of the flange surface as a consequence. This object is achieved by providing the said curved transition region between the pulley's flange and shaft surfaces with a compound curvature having three distinctly curved sections, whereof a first section closest to the flange-side is curved over approximately 30 degrees, preferably between 25 to 35 degrees, whereof a second middle section is curved over approximately 20 degrees, preferably between 15 to 25 degrees, and whereof a third section on the shaft-side describes the remaining part of the overall angle between the conical flange surface and the cylindrical shaft surface. Thus, according to the invention, the surface of the said transition region is more strongly curved on its side that is connected to the flange surface than on its opposite side that is connected to the shaft surface. In doing so, the invention realises a remarkable and surprisingly large reduction in the local tensile stress level in the area where the shaft and the fixed flange meet of more than 20%.

According to the invention, the ratio between the largest and the smallest radius of curvature of the transition region, preferably amounts to more than a factor 3 up to a factor of 10. In a practical application of such preferred embodiment, the radius of curvature of such first, second and third sections respectively amounts to 2.0 ± 1.0 mm, 4.0 ± 1.5 mm and 8.0 ± 2.0 mm.

The invention will now be explained in greater detail with reference to the nonrestricting examples of embodiments shown in the figures, in which similar parts are indicated with the same reference signs, and in which:
figure 1 shows a schematic overview of the key components of a continuously variable transmission;
figure 2 is an isometric view of a shaft-and-flange component of a pulley used in such transmission in a mechanically loaded state, i.e. indicating relative tensile stress levels therein such as they typically occur during operation;
figure 3 shows the known cross-sectional contour of the transition region between the conical flange surface and the cylindrical shaft surface; and
figure 4 shows a preferred embodiment of such contour in accordance with the invention.

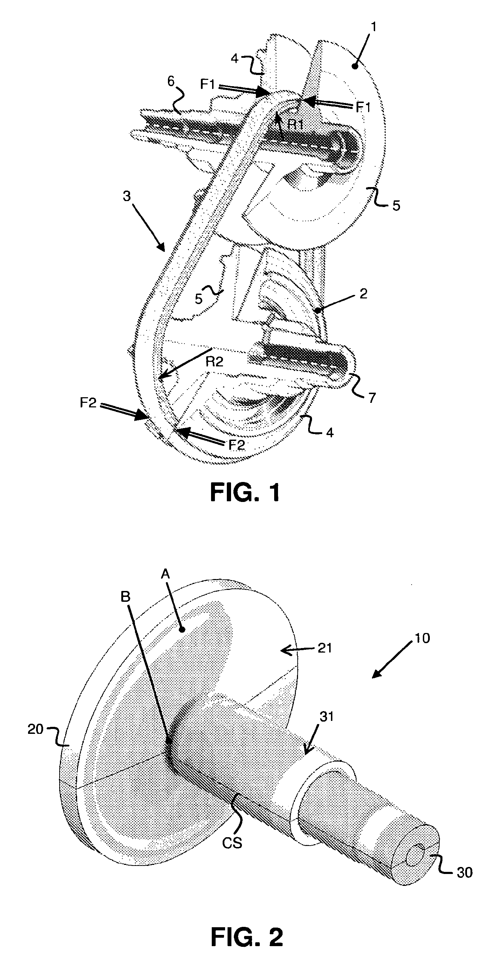

Figure 1 is a schematic depiction drawn in perspective of the known continuously variable transmission that is provided with two pulleys 1, 2 and an endless transmission means 3 wrapped around and in frictional contact with the pulleys 1, 2, such as a drive belt or chain. The endless transmission means 3 can be one of several known types, such as a longitudinally flexible drive chain or belt or an inflexible ring, and can be made of various materials including metal, plastic and composites. The pulleys 1, 2 are each provided with two conical discs or flanges 4, 5 on a respective pulley shaft 6, 7, between which flanges 4, 5 a tapered groove of variable width is defined that accommodates a longitudinally bent part of the endless transmission means 3, an effective radius of contact R1, R2 existing there between.

One flange 4 of each pulley 1, 2 is axially movable relative to the respective pulley shaft 6, 7, such that it can be moved or at least urged towards the respective other, axially and rotationally fixed flange 5 by means of movement means (not shown) such as a piston/cylinder-assembly associated with each respective moveable flange 4. In this manner, each pulley 1, 2 exerts a respective axially oriented clamping force F1, F2 on the endless transmission means 3.

Because of the conical shape of the pulley flanges 4, 5, these clamping forces F1, F2 result in normal forces on the side faces of the endless transmission means 3, i.e. perpendicular to the frictional contact between the endless transmission means 3 and a respective pulley 1, 2. The level of a respective normal force determines the drive force that can be transferred between the endless transmission means 3 and the respective pulley 1, 2 by means of friction, whereas the ratio between such normal forces determines and is used to control the said effective radii of contact R1, R2 between the transmission means 3 and the respective pulleys 1 and 2. The so-called geometric transmission ratio being quantified as the quotient of these contact radii R1 and R2. This type of transmission and its operation and control are all well known in the art.

From the above and the figure 1 it thus appears that each pulley 1, 2 comprises a fixed flange 5 provided on a respective pulley shaft 6, 7. Typically, these latter pulley parts are integrally formed as one continuous piece of shaped, e.g. forged metal, which is referred to as the shaft-and-flange component 10 of a respective pulley 1, 2. In figure 2 such shaft-and-flange component 10 is depicted in isolation in an isometric view.

In figure 2 the various gray tones or shades indicate the relative tensile stress level in a respective surface region of the shaft-and-flange component 10 that would occur during operation of the transmission wherein it is applied; The darker such shading is, the higher the tensile stress level in that particular region is. The region A indicated in figure 2 that is virtually without shading (i.e. white) and that is more or less arc-shaped actually represents the area wherein the endless transmission means 3 is in contact with the shaft-and-flange component 10, i.e. wherein the flange 20 is subjected to a compressive stress rather than to a tensile stress. From figure 2, it appears that the highest tensile stress levels occur in region B where the fixed flange 20 and the shaft 30 meet, i.e. where the conical surface 21 of the fixed flange 20 links up with the cylindrical surface 31 of the shaft 30. The region B of relatively high tensile stress levels essentially spans the same arc as the above-mentioned contact region A.

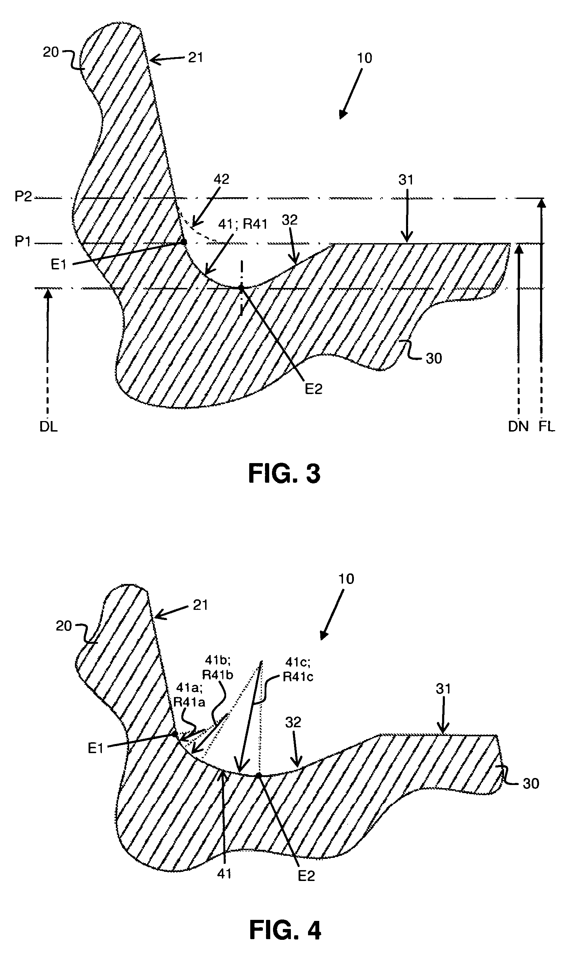

Traditionally, a smoothly concavely curved transition surface 41 is defined between the flange surface 21 and the axially oriented shaft surface 31, so as to minimise the tensile stress increasing notch-effect thereof. Such known design of the transition surface 41 is illustrated in detail in figure 3 in a tangential cross-section of the shaft-and-flange component 10 of figure 2 along the line CS indicated therein.

From figure 3 it appears that in the tangential cross-section of the shaft-and-flange component 10 the known transition surface 41, at a first end E1 thereof, connects to the flange surface 21 at a radial position P1 approximately corresponding to the nominal shaft diameter DN, such that the local diameter DL of the shaft 30 is reduced by the radius R41 of the concave curvature of the transition surface 41. In this particular design the shaft surface 31 is further provided with a partly curved and slanted connecting surface part 32 that is connected to the axially oriented second end E2 of the transition surface 41, along which connecting surface part 32 the shaft diameter gradually increases to the nominal shaft diameter DN.

Of course, the said transition could, alternatively, also be positioned more radially outward, e.g. at a radial position P2 that allows it to directly connect to the shaft surface 31 at the nominal diameter SN thereof, which embodiment is indicated by the dashed line 42 in figure 3. In this latter design the shaft diameter remains unaffected, however, it is also clear that now the surface 21 of the flange 20 available for contacting the endless transmission means 3 has been disadvantageously reduced by this latter design 42 of the transition surface 41.

So, in the conventional design of the shaft-and-flange component 10 of a transmission pulley 4, 5, the curvature of the transition surface 41 is selected as a trade-off between decreasing the local tensile stress level -by applying a larger transition curvature R41- and between increasing either the locally effective diameter of the pulley shaft or the flange surface 21 effectively available for contacting the endless transmission means 3 -by applying a smaller transition curvature R41.

According, to the present invention it is, however, possible to reduce the tensile stress level with a surprisingly large amount, by applying a different design of the transition region between the flange 20 and the shaft 30 of the shaft-and-flange component 10. In such new design, the transition surface 41 between the flange surface 21 and the axially oriented shaft surface 31 is provided with a compound curvature having a radius of curvature R41 a at or near its first end E1 thereof, i.e. where it is connected to the flange surface 21, that is smaller than a radius of curvature R41c at its second, axially aligned end E2 thereof, i.e. where it is connected to the shaft surface 31. Thus, according to the invention, the curvature of the transition surface 41 decreases (i.e. the local radius of curvature R41 increases) in a direction from the flange 20 towards the shaft 30, as is illustrated in the tangential cross-section of the shaft-and-flange component 10 of figure 4 by the respective radii of curvature R41 a, R41 b and R41 c of the transition surface 41.

In particular, in figure 4 transition surface comprises three consecutive sections 41 a, 41 b and 41 c, whereof a first section 41 a connects to the flange surface 21 and is curved over approximately 30 degrees, whereof a second middle section 41 b is curved over approximately 20 degrees, and whereof a third section 41 c spans the remaining angle to the axial direction and connects to the said connecting surface part 32 of the shaft surface 31. Hereby, the radius of curvature R41 b of the second section 41 b is double that radius R41 a of the first section 41 a and the radius of curvature R41c if the third section 41 b is double that radius R41b of the second section 41 b. In doing so, the tensile stress level at the location where the shaft 30 and the fixed flange 20 meet, was reduced by more than 20% and consequently the fatigue strength of such component 10 as a whole was improved remarkably.

## Claims

1. Shaft-and-flange component (10) for a pulley (1, 2) of a continuously variable transmission including an essentially cylindrical pulley shaft (30) and a flange (20) with a smoothly concavely curved transition surface (41) provided between the conical flange surface (21) and the axially oriented shaft surface (31), **characterised in that**, the transition surface (41) is provided with a compound curvature having a radius of curvature (R41a) at or near a first end (E1) thereof connected to the flange surface (21) that is smaller than a radius of curvature (R41c) at a or near a second, axially aligned end (E2) thereof connected to the shaft surface (31) and **in that** the transition region (41) is divided into a finite number of distinctly curved sections (41a-c) and comprises three such sections (41a, 41 b, 41c) that each span an angle of at least 15 degrees, whereof a first section (41 a) closest to the flange (20) spans an angle of between 25 to 35 degrees, whereof a second middle section (41 b) spans an angle of between 15 to 25 degrees and whereof a third section (41c) closest to the shaft (30) spans about 20 to 40 degrees ending in axial orientation.

2. Shaft-and-flange component (10) according to claim 1, **characterised in that** the ratio between the largest radius of curvature (R41c) and the smallest radius of curvature (R41 a) of the transition region (41) lies between 3 and 10.

3. Shaft-and-flange component (10) according to claim 1 or 2, **characterised in that** the radius of curvature (R41b) of the second section (41b) is essentially double that radius (R41a) of the first section (R41a) and that the radius of curvature (R41c) of the third section (41 c) is essentially double that radius (R41b) of the second section (R41 b).

4. Shaft-and-flange component (10) according to claim 1, 2 or 3, **characterised in that** the radius of curvature of such first, second and third sections (41a, 41b, 41c) of the transition surface (41) respectively amounts to 2.0 ± 1.0 mm, 4.0±1.5 mm and 8.0 ± 2.0 mm.

5. Pulley (1, 2) including a movable pulley flange (4) that is fitted on the shaft (30) of the shaft-and-flange component (10) according to any one of the preceding claims and incorporating the fixed pulley flange (5).

## Patentansprüche

1. Wellen- und Flanschkomponente (10) für eine Riemenscheibe (1, 2) eines stufenlosen Getriebes, umfassend eine im Wesentlichen zylindrische Riemenscheibenwelle (30) und einen Flansch (20) mit einer gleichmäßig konkav gekrümmten Übergangsfläche (41), die zwischen der konischen Flanschfläche (21) und der axial ausgerichteten Wellenfläche (31) vorgesehen ist, **dadurch gekennzeichnet, dass** die Übergangsfläche (41) mit einer zusammengesetzten Krümmung versehen ist, die einen Krümmungsradius (R41a) an oder nahe einem ersten Ende (E1) davon, das mit der Flanschfläche (21) verbunden ist, aufweist, der kleiner als ein Krümmungsradius (R41c) an oder nahe einem zweiten, axial ausgerichteten Ende (E2) davon, das mit der Wellenfläche (31) verbunden ist, ist und dass der Übergangsbereich (41) in eine endliche Anzahl von ausgeprägt gekrümmten Abschnitten (41a-c) unterteilt ist, die jeweils einen Winkel von mindestens 15 Grad überspannen, wovon ein erster Abschnitt (41a), der dem Flansch (20) am nächsten ist, einen Winkel von zwischen 25 und 35 Grad überspannt, wovon ein zweiter mittlerer Abschnitt (41b) einen Winkel von zwischen 15 und 25 Grad überspannt und wovon ein dritter Abschnitt (41c), der der Welle (30) am nächsten ist, ca. 20 bis 40 Grad überspannt und in einer axialen Ausrichtung endet.

2. Wellen- und Flanschkomponente (10) nach Anspruch 1, **dadurch gekennzeichnet, dass** das Verhältnis zwischen dem größten Krümmungsradius (R41c) und dem kleinsten Krümmungsradius (R41a) des Übergangsbereichs (41) zwischen 3 und 10 liegt.

3. Wellen- und Flanschkomponente (10) nach Anspruch 1 oder 2, **dadurch gekennzeichnet, dass** der Krümmungsradius (R41b) des zweiten Abschnitts (41b) im Wesentlichen das Doppelte beträgt als der Radius (R41a) des ersten Abschnitts (R41a) und dass der Krümmungsradius (R41c) des dritten Abschnitts (41c) im Wesentlichen das Doppelte beträgt als der Radius (R41b) des zweiten Abschnitts (R41b).

4. Wellen- und Flanschkomponente (10) nach Anspruch 1, 2 oder 3, **dadurch gekennzeichnet, dass** der Krümmungsradius eines solchen ersten, zweiten und dritten Abschnitts (41a, 41b, 41c) der Übergangsfläche (41) 2,0± 1,0 mm, 4,0 ± 1,5 mm bzw. 8,0 ± 2,0 mm beträgt.

5. Riemenscheibe (1, 2) mit einem beweglichen Riemenscheibenflansch (4), der auf der Welle (30) der Wellen- und Flanschkomponente (10) nach einem der vorhergehenden Ansprüche angebracht ist, die den feststehenden Riemenscheibenflansch (5) enthält.

## Revendications

1. Composant arbre et flasque (10) pour une poulie (1, 2) d'une transmission à variation continue, comportant un arbre de poulie essentiellement cylindrique (30) et un flasque (20) avec une surface de transition (41) de courbure concave lisse prévue entre la surface de flasque conique (21) et la surface d'arbre orientée axialement (31), **caractérisé en ce que** la surface de transition (41) est pourvue d'une courbure composée ayant un rayon de courbure (R41a) à ou à proximité d'une première extrémité (E1) de celle-ci connectée à la surface de flasque (21), qui est inférieur à un rayon de courbure (R41c) à ou à proximité d'une deuxième extrémité axialement alignée (E2) de celle-ci connectée à la surface d'arbre (31) et **en ce que** la région de transition (41) est divisée en un nombre fini de sections courbes distinctes (41a-c) et comprend trois de ces sections (41a, 41b, 41c) qui couvrent chacune un angle d'au moins 15 degrés, dont une première section (41a) la plus proche du flasque (20) couvre un angle compris entre 25 et 35 degrés, dont une deuxième section centrale (41b) couvre un angle compris entre 15 et 25 degrés et dont une troisième section (41c) la plus proche de l'arbre (30) couvre un angle compris entre environ 20 et 40 degrés, se terminant en une orientation axiale.

2. Composant arbre et flasque (10) selon la revendication 1, **caractérisé en ce que** le rapport entre le plus grand rayon de courbure (R41c) et le plus petit rayon de courbure (R41a) de la région de transition (41) est compris entre 3 et 10.

3. Composant arbre et flasque (10) selon la revendication 1 ou 2, **caractérisé en ce que** le rayon de courbure (R41b) de la deuxième section (41b) est essentiellement le double du rayon (R41a) de la première section (41a) et **en ce que** le rayon de courbure (R41c) de la troisième section (41c) est essentiellement le double du rayon (R41b) de la deuxième section (41b).

4. Composant arbre et flasque (10) selon l'une quelconque des revendications 1, 2 ou 3, **caractérisé en ce que** le rayon de courbure de ces première, deuxième et troisième sections (41a, 41b, 41c) de la surface de transition (41) est respectivement de 2,0 ± 1,0 mm, de 4,0 ± 1,5 mm et de 8,0 ± 2,0 mm.

5. Poulie (1, 2) comportant un flasque de poulie mobile (4) qui est monté sur l'arbre (30) du composant arbre et flasque (10) selon l'une quelconque des revendications précédentes, et comprenant le flasque de poulie fixe (5).
